# EUROPEAN PATENT APPLICATION

(11) **EP 1 947 664 A1**
(43) Date of publication of application: **23.07.2008**
(21) Application number: 06810887.7
(22) Date of filing: 29.09.2006
(51) Int. Cl.: H01G 9/10, H01G 9/008, H01G 9/035, H01G 9/04, H01G 9/055

(54) **ELECTROLYTIC CAPACITOR**

(30) Priority: 30.09.2005 JP 2005288963
(71) Applicant: Mitsubishi Chemical Corporation, Minato-ku Tokyo 108-0014 (JP); NIPPON CHEMI-CON CORPORATION, Tokyo 141-8605 (JP)
(72) Inventor: TAKEDA, Masayuki, Yokkaichi-shi Mie 510-8530 (JP); MIYAUCHI, Hiroo, Yokkaichi-shi Mie 510-8530 (JP); OZAWA, Masashi, Shinagawa-ku Tokyo 141-8605 (JP)
(74) Representative: HOFFMANN EITLE
(86) International application number: PCT/JP2006/319507
(87) International publication number: WO 2007/037395

(57) **Abstract**

Provided is an electrolytic capacitor which is advantageous in that an electrolyte is remarkably prevented from leaking from the anode.

The present invention is directed to an electrolytic capacitor comprising: a capacitor element which comprises an anode foil with an anode lead means and a cathode foil with a cathode lead means being spirally wound together with a separator disposed therebetween, the capacitor element being impregnated with an electrolyte; a casing for containing therein the capacitor element; and a closure for sealing up an opening portion of the casing, wherein the anode lead means has a ceramic coating layer and/or an insulating synthetic resin layer at at least part of the portion in contact with the closure.

## Description

### Field of the Invention

The present invention relates to an electrolytic capacitor wherein the anode lead means has a ceramic coating layer and/or an insulating synthetic resin layer at at least part of the portion in contact with the closure.

### Background Art

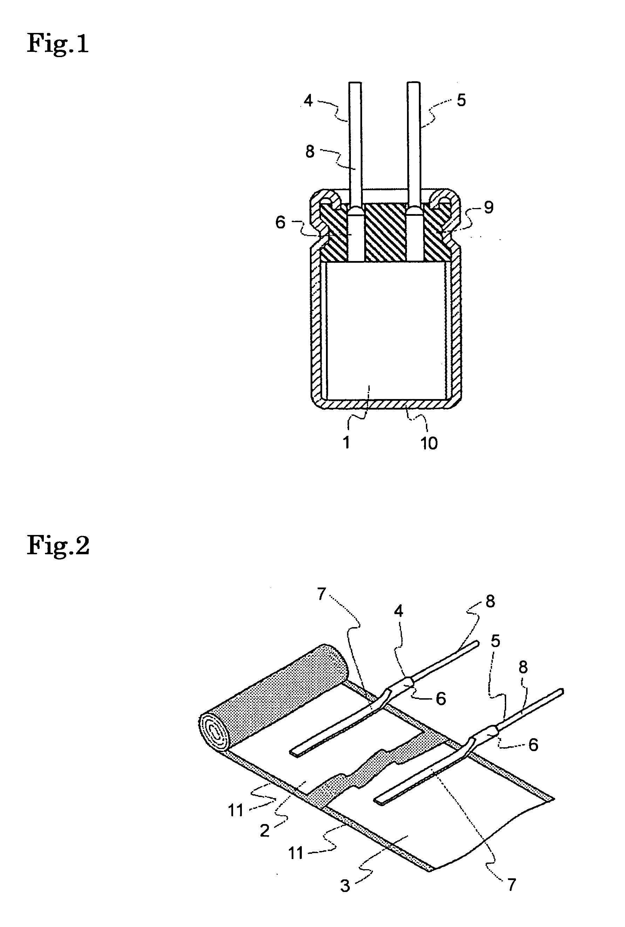

An electrolytic capacitor has a characteristic feature in that it has a small size and a large electrostatic capacity, and it is widely used in low frequency filter and bypass. The electrolytic capacitor generally has a structure shown in Figs. 1 and 2. Specifically, anode foil 2 and cathode foil 3 are spirally wound together with separator 11 disposed between the anode and cathode foils, wherein anode foil 2 is obtained by chemically or electrochemically etching a high-purity strip aluminum foil to increase the surface area of the aluminum foil (treatment for increasing the surface area) and subjecting the resultant aluminum foil to formation in a formation electrolyte such as an aqueous solution of ammonium borate, to form an oxide film layer on the surface of the aluminum foil; cathode foil 3 is comprised of a high-purity aluminum foil which has been merely etched; and separator 11 is comprised of, for example, manila paper. The resultant capacitor element 1 is impregnated with an electrolyte for driving an electrolytic capacitor, and then placed in closed-end cylinder casing 10 comprised of, for example, aluminum. Closure 9 comprised of an elastic rubber is inserted into the opening portion of casing 10, followed by drawing, thus hermetically sealing casing 10.

As shown in Fig. 2, lead wires 4 and 5, which are electrode lead means for leading the anode or cathode to the outside, are connected to anode foil 2 and cathode foil 3, respectively, by a method of, for example, stitch welding or ultrasonic welding. Each of lead wires 4 and 5 comprises round bar portion 6 comprised of aluminum; connector 7 formed at one end of the round bar portion for connection with electrode foil 2 or 3; and external connector 8 comprised of a solderable metal and fixed to the other end of round bar portion 6 by a method of, for example, welding.

In the electrolytic capacitor, the cathode, anode, and electrolyte are important constituents, each of which directly affects the properties of the electrolytic capacitor.

Among these constituents, with respect to the cathode, a problem has been pointed out in that the electrolyte leaks from the cathode. The details are as follows: the self-potential of a lead wire as a cathode lead means (cathode lead wire) in the electrolyte is noble as compared to that of the cathode foil. Consequently, a cathode current flows through the cathode lead wire both when an electric current is applied and when no current is applied. As a result, hydroxide ions are formed at the interface between the cathode lead wire and the electrolyte. In a conventional electrolyte comprising a quaternary cyclic amidinium as a solute and γ-butyrolactone as a solvent, hydroxide ions cause a quaternary cyclic amidinium to undergo ring opening to form a secondary amine which is a strong base, and the secondary amine reacts with γ-butyrolactone to form γ-hydroxybutyric acid, thus lowering the pH of the electrolyte. When the pH is lowered, the above secondary amine undergoes ring closure to reform a quaternary cyclic amidinium salt having low volatility and high moisture absorption. The quaternary cyclic amidinium salt is reformed between the round bar portion of the cathode lead means and the closure, and absorbs moisture to cause the electrolyte to leak from the cathode. For solving this problem, various techniques have been proposed (see, for example, patent documents 1 and 2).

In contrast, with respect to the anode, the anode foil is covered with an inactive oxide film layer formed by a treatment of formation, and therefore it has been considered that the anode is free of the problem of electrolyte leakage mentioned above in connection with the cathode.

On the other hand, with respect to the electrolyte, for obtaining an electrolytic capacitor having a low impedance and excellent thermal stability as well as a high heat resistance, an electrolyte for an electrolytic capacitor containing a tetrafluoroaluminate ion has been proposed (see, for example, patent document 3).
[Patent document 1] Japanese Unexamined Patent Publication No. 2004-165206
[Patent document 2] Japanese Unexamined Patent Publication No. 2004-165207
[Patent document 3] Japanese Unexamined Patent Publication No. 2003-142346

### DISCLOSURE OF THE INVENTION

### Problems to be Solved by the Invention

In studies made on the electrolytic capacitor using the electrolyte containing a tetrafluoroaluminate ion, the present inventors have found that the anode has a problem of electrolyte leakage in the strict meaning, which has conventionally been considered not to occur, and solving this problem is effective in further improving the electrolytic capacitor in properties, and the present invention has been completed.

### Means to Solve the Problems

The present invention is directed to an electrolytic capacitor comprising: a capacitor element which comprises an anode foil with an anode lead means and a cathode foil with a cathode lead means being spirally wound together with a separator disposed therebetween, the capacitor element being impregnated with an electrolyte; a casing for containing therein the capacitor element; and a closure for sealing up an opening portion of the casing, wherein the anode lead means has a ceramic coating layer and/or an insulating synthetic resin layer at at least part of the portion in contact with the closure.

### Effect of the Invention

In the present invention, there can be obtained an electrolytic capacitor which is advantageous in that an electrolyte is remarkably prevented from leaking from the anode. The electrolytic capacitor of the present invention is especially effective when using an electrolyte containing a tetrafluoroaluminate ion, but the electrolyte is not limited to this.

### BRIEF DESCRIPTION OF THE DRAWINGS

[Fig. 1] Cross-sectional view showing the inner structure of an electrolytic capacitor.
[Fig. 2] Exploded perspective view showing the structure of a capacitor element.
[Fig. 3] Cross-sectional view showing the inner structure of a large-size electrolytic capacitor.

### Description of Reference Numerals

Reference numerals in the drawings are as follows.
1: Capacitor element
2: Anode foil
3: Cathode foil
4: Lead wire for anode lead
5: Lead wire for cathode lead
6: Round bar portion
7: Connector
8: External connector
9: Closure
10: Casing
11: Separator
101: Capacitor element
104: Rivet for anode
105: Rivet for cathode
106: Round bar portion
109: Closure member
110: Casing
121: Anode lead terminal
122: Cathode lead terminal
123: Head
124: External terminal
125: Insert portion

### BEST MODE FOR CARRYING OUT THE INVENTION

The present invention will be described below taking as an example the structure of the electrolytic capacitor shown in Figs. 1 and 2 with respect to the individual constituent parts. The structure shown in Figs. 1 and 2 is generally used in a small-size electrolytic capacitor.

In the present invention, with respect to anode foil 2, there is no particular limitation. For example, there can be used an anode foil obtained by chemically or electrochemically etching an aluminum foil having a purity of 99.9% or higher in an acidic solution to increase the surface area, and then subjecting the resultant aluminum foil to formation in a phosphate formation electrolyte containing, for example, ammonium dihydrogenphosphate or diammonium hydrogenphosphate, a borate formation electrolyte containing, for example, ammonium borate, or an adipate formation electrolyte containing, for example, ammonium adipate as a solute to form an aluminum oxide film layer on the surface of the aluminum foil.

In the present invention, with respect to cathode foil 3, there is no particular limitation, and there can be used, for example, a cathode foil obtained by etching an aluminum foil having a purity of 99.9% or higher in the same manner as in the anode foil. Alternatively, a cathode foil having been formed on part of or all of the surface thereof a film comprised of at least one of a metal nitride and a metal can be used. Such a cathode foil is described in, for example, Japanese Unexamined Patent Publication No. 2004-165203. Specifically, examples of metal nitrides include titanium nitride, zirconium nitride, tantalum nitride and niobium nitride, and examples of metals include titanium, zirconium, tantalum and niobium, and the film has a thickness of, for example, 0.02 to 0.1 µm. A cathode foil comprised of aluminum having a purity of less than 99.9% and containing at least one member selected from copper, iron, manganese, tin and titanium can be used in combination with a cathode lead means using an aluminum wire material having a purity of 99.9% or higher. Such a cathode foil is described in, for example, Japanese Unexamined Patent Publication No. 2004-165204.

In the present invention, with respect to separator 11, there is no particular limitation, and paper such as manila paper or kraft paper can be used. In the separator, nonwoven fabric comprised of, for example, glass fiber, polypropylene or polyethylene can be used.

In the present invention, in forming the electrode lead means, an aluminum wire material intermittently pressed is first cut into a predetermined size to form an aluminum conductor comprising round bar portion 6 and connector 7, and then the aluminum conductor is subjected to formation to form an anode oxide film on the surface of the conductor. Then, external connector 8 comprised of a copper-plated steel wire (CP wire) is welded to the end of the resultant aluminum conductor to form lead wires 4, 5. In the electrode lead means, aluminum having a purity of 99.9% or higher can be used. From the viewpoint of preventing the electrolyte leakage, it is preferred that the aluminum for electrode lead means has a purity equivalent to or higher than that of the electrode foil.

In the present invention, the anode lead means is processed so that it has a ceramic coating layer and/or an insulating synthetic resin layer at at least part of, preferably all of the portion in contact with the closure when the capacitor element is placed and sealed in a casing.

The ceramic coating layer can be formed as follows. A coating composition comprising a metal alkoxide ceramic is applied to round bar portion 6 of the aluminum conductor having an anode oxide film formed on the surface as mentioned above, and then subjecting the coating composition to heat treatment, and further applying the coating composition, and then subjecting it to heat treatment, to form a ceramic coating layer on the aluminum conductor.

Examples of ceramics used in the metal alkoxide ceramic include Al₂O₃, SiO₂, ZrO₂, TiO₂, MgO, H₃BO₃, Cr₂O₃, BaTiO₃, PbTiO₃ and KTaO₃. From the viewpoint of achieving excellent coating properties, the ceramic to be used is preferably at least one member selected from Al₂O₃, SiO₂ and ZrO₂. Further, from the viewpoint of achieving excellent strength, a mixture of Al₂O₃ and SiO₂ is preferably used.

As an example of the coating method, there can be mentioned a coating method in which round bar portion 6 is dipped in a coating composition. Specifically, the aluminum conductor is dipped in a coating composition and then subjected to heat treatment, and subsequently dipped again in the coating composition, and then subjected to heat treatment, to form a ceramic coating layer on the aluminum conductor. Then, connector 7 is dipped in a methanol solution to remove the ceramic coating layer using, for example, ultrasonic waves so that the ceramic coating layer remains only on round bar portion 6. From the viewpoint of easily controlling the removal of the ceramic coating layer and forming the ceramic coating layer on the round bar portion with accuracy, the above-mentioned method by application is preferred.

The insulating synthetic resin layer can be formed as follows. Examples of insulating synthetic resin materials include thermosetting resins such as epoxy, phenolic, furan, melamine, xylene and guanamine resins; and thermoplastic resins such as fluorine, butadiene, polyamide, polyamideimide, polyacrylate, polyimide, polyether imide, polyether ether ketone, polycarbonate, polyvinyl formal, polyphenylene sulfide, liquid crystalline polymer, ketone, coumarone and MBS resins. In the insulating synthetic resin material, for example, a silane or titanate coupling agent can be incorporated in an amount of 10% by weight or less. For example, a coating composition comprising an epoxy resin and a silane coupling agent such as β-(3,4-epoxycyclohexyl)ethyltrimethoxysilane, can be used.

The insulating synthetic resin layer can be formed on the aluminum conductor by applying to round bar portion 6 of the above aluminum conductor having an anode oxide film formed on the surface thereof a coupling agent and drying it to form a coupling agent layer and then, or, without applying a coupling agent, applying to the round bar portion a coating composition comprising a liquid melted material of an insulating synthetic resin formed by heating or using an appropriate solvent, and then drying the coating composition applied.

Alternatively, the insulating synthetic resin layer can be formed by covering round bar portion 6 with a shaped article of a heat-melting synthetic resin film and then subjecting it to heating treatment.

As an example of the coating method, there can be mentioned a coating method in which round bar portion 6 is dipped in a coating composition comprising an insulating synthetic resin. Specifically, the aluminum conductor is dipped in the coating composition and then dried to form an insulating synthetic resin layer on the aluminum conductor. Then, connector 7 is dipped in a methanol solution to remove the insulating synthetic resin layer using, for example, ultrasonic waves so that the insulating synthetic resin layer remains only on round bar portion 6. From the viewpoint of easily controlling the removal of the insulating synthetic resin layer and forming the insulating synthetic resin layer on the round bar portion with accuracy, the above-mentioned method by application is desired.

Connector 7 of lead wire 4 having a ceramic coating layer and/or an insulating synthetic resin layer formed as mentioned above is mechanically connected to anode foil 2 by, for example, stitch welding or ultrasonic welding. The ceramic coating layer and/or insulating synthetic resin layer can be formed after connecting lead wire 4 to anode foil 2. From the viewpoint of achieving excellent coating accuracy, these layers are preferably formed prior to the process for producing a capacitor. Further, for surely preventing the electrolyte leakage, these layers are preferably formed on at least round bar portion 6 of lead wire 4.

Connector 7 of lead wire 5 is similarly connected to cathode foil 3. For preventing the electrolyte from leaking from the cathode, it is preferred that, like the above anode lead means, the cathode lead means of the cathode foil has a ceramic coating layer and/or an insulating synthetic resin layer at at least part of, preferably all of the portion in contact with the closure when the capacitor element is placed and sealed in a casing.

From the viewpoint of preventing the electrolyte leakage and obtaining high film strength, the thickness of the ceramic coating layer and/or insulating synthetic resin layer is preferably 5 to 30 µm, more preferably 10 to 20 µm.

The above-obtained capacitor element is impregnated with an electrolyte, and can be placed and sealed in a casing. In the present invention, for repairing the crack or damaged portion of the oxide film layer on the surface of the anode foil, it is preferred that, before being impregnated with the electrolyte, the capacitor element is immersed in a formation electrolyte for repair formation.

With respect to the formation electrolyte for repair formation, there is no particular limitation, and a formation electrolyte conventionally used in the formation of anode foil 2 can be used. Specific examples include phosphate formation electrolytes containing, for example, ammonium dihydrogenphosphate or diammonium hydrogenphosphate, borate formation electrolytes containing, for example, ammonium borate, and adipate formation electrolytes containing, for example, ammonium adipate as a solute. Of these, from the viewpoint of achieving excellent water resistance, a phosphate formation electrolyte is preferably used. The concentration of the formation electrolyte can be the concentration of the formation electrolyte conventionally used in the formation of anode foil, and, for example, an aqueous solution containing an electrolyte in an amount of 0.01 to 1% by weight can be used. The formation electrolyte for repair formation may be either the same as or different from the formation electrolyte used in the formation of anode foil of the capacitor element.

The repair formation can be performed by a known method, for example, by impregnating the capacitor element with a formation electrolyte and then applying a voltage to the anode. The repair formation is preferably performed at a rated voltage or higher and at a voltage for the formation of anode foil or lower. The formation time can be, for example, 5 to 120 minutes.

It is preferred that the capacitor element which has been subjected to repair formation is washed and dried and then impregnated with the electrolyte.

With respect to the electrolyte, there is no particular limitation, and an electrolyte for use in an aluminum electrolytic capacitor can be used. The present invention is especially effective when using an electrolyte containing a tetrafluoroaluminate ion. The reason that the electrolyte containing a tetrafluoroaluminate ion leaks from the anode in the electrolytic capacitor is presumed as follows. In this electrolytic capacitor, the self-potential of anode is likely to shift toward lower potential side, as compared to that in a conventional aluminum electrolytic capacitor using an electrolyte containing, for example, a quaternary ammonium salt of phthalic acid, and the anode lead means becomes more noble than the anode foil, and an oxidation-reduction reaction proceeds at this portion to form a hydroxide, so that the properties of the electrolytic capacitor are easily changed. In the present invention, the anode lead means has a ceramic coating layer and/or an insulating synthetic resin layer at at least part of the portion in contact with the closure, and therefore, it is presumed that an oxidation-reduction reaction is inhibited at this portion, thus preventing the electrolyte from leaking from the anode.

As an electrolyte containing a tetrafluoroaluminate ion, one described in, for example, Japanese Unexamined Patent Publication No. 2003-142346 can be used. Specifically, the electrolyte preferably uses a tetrafluoroaluminate ion (AlF₄⁻) as all of or part of the anion component, and the tetrafluoroaluminate ion in the anion component is preferably 5 to 100 mol%, more preferably 30 to 100 mol%, especially preferably 50 to 100 mol%, the most preferably 100 mol%.

The electrolyte can contain a tetrafluoroaluminate ion in the form of a salt, preferably in the form of at least one tetrafluoroaluminate salt selected from the group consisting of a quaternary onium salt, an amine salt, an ammonium salt and an alkali metal salt.

Preferred examples of quaternary onium salts include quaternary ammonium salts, quaternary phosphonium salts, quaternary imidazolium salts, and quaternary amidinium salts.

Preferred examples of quaternary ammonium ions of quaternary ammonium salts are as follows.

### (i) Tetraalkylammonium

Examples include tetramethylammonium, ethyltrimethylammonium, diethyldimethylammonium, triethylmethylammonium, tetraethylammonium, trimethyl-n-propylammonium, trimethylisopropylammonium, trimethyl-n-butylammonium, trimethylisobutylammonium, trimethyl-t-butylammonium, trimethyl-n-hexylammonium, dimethyldi-n-propylammonium, dimethyldiisopropylammonium, dimethyl-n-propylisopropylammonium, methyltri-n-propylammonium, methyltriisopropylammonium, methyldi-n-propylisopropylammonium, methyl-n-propyldiisopropylammonium, triethyl-n-propylammonium, triethylisopropylammonium, triethyl-n-butylammonium, triethylisobutylammonium, triethyl-t-butylammonium, dimethyldi-n-butylammonium, dimethyldiisobutylammonium, dimethyldi-t-butylammonium, dimethyl-n-butylethylammonium, dimethylisobutylethylammonium, dimethyl-t-butylethylammonium, dimethyl-n-butylisobutylammonium, dimethyl-n-butyl-t-butylammonium, dimethylisobutyl-t-butylammonium, diethyldi-n-propylammonium, diethyldiisopropylammonium, diethyl-n-propylisopropylammonium, ethyltri-n-propylammonium, ethyltriisopropylammonium, ethyldi-n-propylisopropylammonium, ethyl-n-propyldiisopropylammonium, diethylmethyl-n-propylammonium, ethyldimethyl-n-propylammonium, ethylmethyldi-n-propylammonium, diethylmethylisopropylammonium, ethyldimethylisopropylammonium, ethylmethyldiisopropylammonium, ethylmethyl-n-propylisopropylammonium, tetra-n-propylammonium, tetraisopropylammonium, n-propyltriisopropylammonium, di-n-propyldiisopropylammonium, tri-n-propylisopropylammonium, , trimethylhexylammonium, trimethylheptylammonium, trimethyloctylammonium and trimethylnonylammonium. These individually have 4 to 12 carbon atoms in total, but a tetraalkylammonium having 13 or more carbon atoms in total can be used in the electrolyte, and examples include trimethyldecylammonium, trimethylundecylammonium and trimethyldodecylammonium.

### (ii) Aromatic substituted ammonium

Examples include aromatic substituted ammoniums having 4 to 12 carbon atoms in total, such as trimethylphenylammonium, and those having 13 or more carbon atoms in total, such as tetraphenylammonium.

### (iii) Aliphatic cyclic ammonium

Examples include pyrrolidiniums such as N,N-dimethylpyrrolidinium, N-ethyl-N-methylpyrrolidinium, N,N-diethylpyrrolidinium and N,N-tetramethylenepyrrolidinium; piperidiniums such as N,N-dimethylpiperidinium, N-ethyl-N-methylpiperidinium, N,N-diethylpiperidinium, N,N-tetramethylenepiperidinium and N,N-pentamethylenepiperidinium; and morpholiniums such as N,N-dimethylmorpholinium, N-ethyl-N-methylmorpholinium and N,N-diethylmorpholinium. These individually have 4 to 12 carbon atoms in total, but an aliphatic cyclic ammonium having 13 or more carbon atoms in total can be used in the electrolyte.

### (iv) Ions of nitrogen-containing heterocyclic aromatic compound

Examples include pyridiniums such as N-methylpyridinium, N-ethylpyridinium, N-n-propylpyridinium, N-isopropylpyridinium and N-n-butylpyridinium. These individually have 4 to 12 carbon atoms in total, but a pyridinium having 13 or more carbon atoms in total can be used in the electrolyte.

Preferred examples of quaternary phosphonium ions of quaternary phosphonium salts include tetramethylphosphonium, triethylmethylphosphonium and tetraethylphosphonium. These individually have 4 to 12 carbon atoms in total, but a quaternary phosphonium having 13 or more carbon atoms in total can be used in the electrolyte.

Preferred examples of quaternary imidazolium ions of quaternary imidazolium salts include 1,3-dimethylimidazolium, 1,2,3-trimethylimidazolium, 1-ethyl-3-methylimidazolium, 1-ethyl-2,3-dimethylimidazolium, 1,3-diethylimidazolium, 1,2-diethyl-3-methylimidazolium, 1,3-diethyl-2-methylimidazolium, 1,2-dimethyl-3-n-propylimidazolium, 1-n-butyl-3-methylimidazolium, 1,2,4-trimethyl-3-n-propyldimethylimidazolium, 1,2,3,4-tetramethylimidazolium, 1,2,3,4,5-pentamethylimidazolium, 2-ethyl-1,3-dimethylimidazolium, 1,3-dimethyl-2-n-propylimidazolium, 1,3-dimethyl-2-n-pentylimidazolium, 1,3-dimethyl-2-n-heptylimidazolium, 1,3,4-trimethylimidazolium, 2-ethyl-1,3,4-trimethylimidazolium, 1,3-dimethylbenzimidazolium, 1-phenyl-3-methylimidazolium, 1-benzyl-3-methylimidazolium, 1-phenyl-2,3-dimethylimidazolium, 1-benzyl-2,3-dimethylimidazolium, 2-phenyl-1,3-dimethylimidazolium and 2-benzyl-1,3-dimethylimidazolium. These individually are a quaternary imidazolium having 4 to 12 carbon atoms in total.

A quaternary imidazolium having 13 or more carbon atoms in total can be used in the electrolyte, and preferred examples include 1,3-dimethyl-2-n-undecylimidazolium and 1,3-dimethyl-2-n-heptadecylimidazolium. A quaternary imidazolium containing a hydroxyl group or an ether group can be used in the electrolyte, and preferred examples include 2-(2'-hydroxy)ethyl-1,3-dimethylimidazolium, 1-(2'-hydroxy)ethyl-2,3-dimethylimidazolium, 2-ethoxymethyl-1,3-dimethylimidazolium and 1-ethoxymethyl-2,3-dimethylimidazolium.

Preferred examples of quaternary amidiniums include imidazoliniums such as 1,3-dimethylimidazolinium, 1,2,3-trimethylimidazolinium, 1-ethyl-3-methylimidazolinium, 1-ethyl-2,3-dimethylimidazolinium, 1,3-diethylimidazolinium, 1,2-diethyl-3-methylimidazolinium, 1,3-diethyl-2-methylimidazolinium, 1,2-dimethyl-3-n-propylimidazolinium, 1-n-butyl-3-methylimidazolinium, 1,2,4-trimethyl-3-n-propylimidazolinium, 1,2,3,4-tetramethylimidazolinium, 2-ethyl-1,3-dimethylimidazolinium, 1,3-dimethyl-2-n-propylimidazolinium, 1,3-dimethyl-2-n-pentylimidazolinium, 1,3-dimethyl-2-n-heptylimidazolinium, 1,3,4-trimethylimidazolinium, 2-ethyl-1,3,4-trimethylimidazolinium, 1-phenyl-3-methylimidazolinium, 1-benzyl-3-methylimidazolinium, 1-phenyl-2,3-dimethylimidazolinium, 1-benzyl-2,3-dimethylimidazolinium, 2-phenyl-1,3-dimethylimidazolinium and 2-benzyl-1,3-dimethylimidazolinium; and tetrahydropyrimidiniums such as 1,3-dimethyltetrahydropyrimidinium, 1,3-diethyltetrahydropyrimidinium, 1-ethyl-3-methyltetrahydropyrimidinium, 1,2,3-trimethyltetrahydropyrimidinium, 1,2,3-triethyltetrahydropyrimidinium, 1-ethyl-2,3-dimethyltetrahydropyrimidinium, 2-ethyl-1,3-dimethyltetrahydropyrimidinium, 1,2-diethyl-3-methyltetrahydropyrimidinium, 1,3-diethyl-2-methyltetrahydropyrimidinium, 5-methyl-1,5-diazabicyclo[4.3.0]nonenium-5 and 8-methyl-1,8-diazabicyclo[5.4.0]undecenium-7. These individually are a quaternary amidinium having 4 to 12 carbon atoms in total.

A quaternary amidinium having 13 or more carbon atoms in total can be used in the electrolyte, and preferred examples include 1,3-dimethyl-2-n-undecylimidazolinium and 1,3-dimethyl-2-n-heptadecylimidazolinium. A quaternary amidinium containing a hydroxyl group or an ether group can be used in the electrolyte, and preferred examples include 2-(2'-hydroxy)ethyl-1,3-dimethylimidazolinium, 1-(2'-hydroxy)ethyl-2,3-dimethylimidazolinium, 2-ethoxymethyl-1,3-dimethylimidazolinium and 1-ethoxymethyl-2,3-dimethylimidazolinium.

The electrolyte can contain a tetrafluoroaluminate ion in the form of not only a quaternary onium salt, but also an amine salt, an ammonium salt (NH₄⁺AlF₄⁻) or an alkali metal salt.

Preferred examples of amines for amine salt include tertiary amines such as trimethylamine, ethyldimethylamine, diethylmethylamine, triethylamine, pyridine, N-methylimidazole, 1,5-diazabicyclo[4.3.0]nonene-5 and 1,8-diazabicyclo[5.4.0]undene-7. Instead of the tertiary amine, a primary amine or a secondary amine can be used, and examples include diethylamine, diisopropylamine, isobutylamine, di-2-ethylhexylamine, pyrrolidine, piperidine, morpholine, hexamethyleneimine, ethylamine, n-propylamine, isopropylamine, t-butylamine, sec-butylamine, 2-ethylhexylamine, 3-methoxypropylamine and 3-ethoxypropylamine. Preferred examples of alkali metals include lithium, sodium, potassium, rubidium and cesium.

Among these cation components, preferred is a quaternary onium having 4 to 12 carbon atoms in total from the viewpoint of obtaining an electrolyte having high electrolytic conductivity, and especially preferred is at least one compound selected from the group consisting of tetraethylammonium, triethylmethylammonium, diethyldimethylammonium, ethyltrimethylammonium, tetramethylammonium, N,N-dimethylpyrrolidinium, N-ethyl-N-methylpyrrolidinium, 1,3-dimethylimidazolium, 1,2,3-trimethylimidazolium, 1-ethyl-3-methylimidazolium, 1-ethyl-2,3-dimethylimidazolium, 1,2,3,4-tetramethylimidazolium, 1,3-diethylimidazolium, 2-ethyl-1,3-dimethylimidazolium, 1,3-dimethyl-2-n-propylimidazolium, 1,3-dimethyl-2-n-pentylimidazolium, 1,3-dimethyl-2-n-heptylimidazolium, 1,3,4-trimethylimidazolium, 2-ethyl-1,3,4-trimethylimidazolium, 1,3-dimethylbenzimidazolium, 1-phenyl-3-methylimidazolium, 1-benzyl-3-methylimidazolium, 1-phenyl-2,3-dimethylimidazolium, 1-benzyl-2,3-dimethylimidazolium, 2-phenyl-1,3-dimethylimidazolium, 2-benzyl-1,3-dimethylimidazolium, 1,3-dimethylimidazolinium, 1,2,3-trimethylimidazolinium, 1-ethyl-3-methylimidazolinium, 1-ethyl-2,3-dimethylimidazolinium, 1,2,3,4-tetramethylimidazolinium, 1,3-diethylimidazolinium, 2-ethyl-1,3-dimethylimidazolinium, 1,3-dimethyl-2-n-propylimidazolinium, 1,3-dimethyl-2-n-pentylimidazolinium, 1,3-dimethyl-2-n-heptylimidazolinium, 1,3,4-trimethylimidazolinium, 2-ethyl-1,3,4-trimethylimidazolinium, 1-phenyl-3-methylimidazolinium, 1-benzyl-3-methylimidazolinium, 1-phenyl-2,3-dimethylimidazolinium, 1-benzyl-2,3-dimethylimidazolinium, 2-phenyl-1,3-dimethylimidazolinium and 2-benzyl-1,3-dimethylimidazolinium, and further preferred is 1-ethyl-2,3-dimethylimidazolinium or 1,2,3,4-tetramethylimidazolinium.

The electrolyte can contain an anion component other than the tetrafluoroaluminate ion, and specific examples of the anion components include fluorine-containing inorganic ions such as a tetrafluoroborate ion, a hexafluorophosphate ion, a hexafluoroarsenate ion, a hexafluoroantiomonate ion, a hexafluoroniobate ion and a hexafluorotantalate ion; carboxylic acid ions such as a phthalic acid ion, a maleic acid ion, a salicylic acid ion, a benzoic acid ion and an adipic acid ion; sulfonic acid ions such as a benzenesulfonic acid ion, a toluenesulfonic acid ion, a dodecylbenzenesulfonic acid ion, a trifluoromethanesulfonic acid ion and a perfluorobutanesulfonic acid; inorganic oxo-acid ions such as a boric acid ion and a phosphoric acid ion; and a bis(trifluoromethanesulfonyl)imide ion, a bis(pentafluoroethanesulfonyl)imide ion, a tris(trifluoromethanesulfonyl)methide ion, a perfluoroalkylborate ion and a perfluoroalkylphosphate ion. As a salt, the above salt and, for example, a hydrogenphthalate or a hydrogenmaleate can be used in combination. For example, when a tetrafluoroaluminate and a hydrogenphthalate or hydrogenmaleate are used in combination, it is preferred that the salt is comprised mainly of the tetrafluoroaluminate, and the amount of the tetrafluoroaluminate is preferably 50% by weight or more, more preferably 60% by weight or more, further preferably 70% by weight or more, based on the total weight of the salts, and the weight ratio of the tetrafluoroaluminate is preferably higher.

When used in an electrolytic capacitor, the tetrafluoroaluminate must be high in purity, and therefore the tetrafluoroaluminate to be used is purified if necessary by, for example, recrystallization or solvent extraction so that it has a desired purity.

The tetrafluoroaluminate concentration of the electrolyte is preferably 5 to 40% by weight, further preferably 10 to 35% by weight. When the tetrafluoroaluminate concentration is too low, the electrolyte is reduced in electrolytic conductivity. On the other hand, when the tetrafluoroaluminate concentration is too high, the electrolyte is likely to increase in viscosity or suffer deposition of salt at low temperatures. Generally, when the electrolyte for electrolytic capacitor is reduced in concentration, the electrolyte tends to be increased in voltage proof. Therefore, the optimum concentration of the electrolyte can be determined depending on a desired rated voltage of capacitor. The electrolyte may be either a concentrated solution containing 50% or more of a salt or an ambient-temperature molten salt.

From the viewpoint of obtaining an electrolyte having more excellent electrolytic conductivity, thermal stability, and voltage proof, it is preferred that the electrolyte contains 50% by weight or more of a solvent. Examples of solvents include at least one member selected from the group consisting of a carbonic ester, a carboxylic acid ester, a phosphoric acid ester, a nitrile, an amide, a sulfone, an alcohol and water. It is preferred that the solvent is selected from a carbonic ester, a carboxylic acid ester, a phosphoric acid ester, a nitrile, an amide, a sulfone and an alcohol, which are likely to exhibit stable properties as the lapse of time when used in the electrolyte. When water is used as a solvent, it is preferred that water is used together with another solvent, namely, water is used as part of the solvent.

Specific examples of the solvents include the following:
carbonic esters such as chain carbonic esters (e.g., chain carbonates such as dimethyl carbonate, ethylmethyl carbonate, diethyl carbonate, diphenyl carbonate and methylphenyl carbonate) and cyclic carbonic esters (e.g., cyclic carbonates such as ethylene carbonate, propylene carbonate, 2,3-dimethyl ethylene carbonate, butylene carbonate, vinylene carbonate and 2-vinyl ethylene carbonate); carboxylic acid esters such as aliphatic carboxylic acid esters (e.g., methyl formate, methyl acetate, methyl propionate, ethyl acetate, propyl acetate, butyl acetate and amyl acetate), aromatic carboxylic acid esters (e.g., aromatic carboxylates such as methyl benzoate and ethyl benzoate) and lactones (e.g., γ-butyrolactone, γ-valerolactone and δ-valerolactone); phosphoric acid esters such as trimethyl phosphate, ethyldimethyl phosphate, diethylmethyl phosphate and triethyl phosphate; nitriles such as acetonitrile, propionitrile, methoxypropionitrile, glutaronitrile, adiponitrile and 2-methylglutaronitrile; amides such as N-methylformamide, N-ethylformamide, N,N-dimethylformamide, N,N-dimethylacetamide and N-methylpyrrolidinone; sulfones such as dimethyl sulfone, ethylmethyl sulfone, diethyl sulfone, sulfolane, 3-methylsulfolane and 2,4-dimethylsulfolane; alcohols such as ethylene glycol, propylene glycol, ethylene glycol monomethyl ether and ethylene glycol monoethyl ether; ethers such as ethylene glycol dimethyl ether, ethylene glycol diethyl ether, 1,4-dioxane, 1,3-dioxolane, tetrahydrofuran, 2-methyltetrahydrofuran, 2,6-dimethyltetrahydrofuran and tetrahydropyran; sulfoxides such as dimethyl sulfoxide, methylethyl sulfoxide and diethyl sulfoxide; and 1,3-dimethyl-2-imidazolidinone, 1,3-dimethyl-3,4,5,6-tetrahydro-2(1H)-pyrimidinone and 3-methyl-2-oxazolidinone.

From the viewpoint of obtaining an electrolyte having more excellent electrolytic conductivity, a non-aqueous solvent having a relative permittivity (ε, 25°C) of 25 or more may be preferably used as a solvent. From the viewpoint of achieving safety, a non-aqueous solvent having a flash point of 70°C or higher may be preferably used as a solvent.

From the viewpoint of obtaining an electrolyte having more excellent thermal stability, a solvent having a boiling point of 250°C or higher, a melting point of -60 to 40°C, and a permittivity (ε, 25°C) of 25 or more is preferably contained in an amount of 25% by weight or more, more preferably 40% by weight or more, especially preferably 50% by weight or more, based on the total weight of the solvents. Examples of the solvents include sulfone, and especially preferred is sulfolane or 3-methylsulfolane. When such a solvent is used in the electrolyte, there can be obtained an electrolytic capacitor having low impedance and high voltage proof, which is assured that it can operate for 1,000 hours or longer at an environmental temperature of 110 to 150°C.

From the viewpoint of obtaining an electrolytic capacitor having a lower impedance, a solvent having a boiling point of 190 to lower than 250°C, a melting point of -60 to 40°C, and a permittivity (ε, 25°C) of 25 or more is preferably contained in an amount of 25% by weight or more, more preferably 40% by weight or more, especially preferably 50% by weight or more, based on the total weight of the solvents. Examples of the solvents include carbonic esters, carboxylic acid esters, phosphoric acid esters, nitriles, amides and alcohols, and especially preferred is γ-butyrolactone or ethylene glycol. When such a solvent is used in the electrolyte, an electrolytic capacitor having extremely low impedance and high voltage proof can be obtained.

From the viewpoint of achieving excellent thermal stability, the electrolyte preferably contains sulfolane as a solvent and 1-ethyl-2,3-dimethylimidazolinium tetrafluoroaluminate or 1,2,3,4-tetramethylimidazolinium tetrafluoroaluminate in an amount of 5 to 40% by weight, based on the total weight of the electrolyte. From the viewpoint of obtaining an electrolytic capacitor having a low impedance, the electrolyte preferably contains γ-butyrolactone as a solvent and 1-ethyl-2,3-dimethylimidazolinium tetrafluoroaluminate or 1,2,3,4-tetramethylimidazolinium tetrafluoroaluminate in an amount of 5 to 40% by weight, based on the total weight of the electrolyte. Sulfolane and γ-butyrolactone are preferably used in combination as a solvent.

In addition to the salt and solvent, an additive can be added to the electrolyte. An additive is added to the electrolyte for various purposes, for example, improvement of the electrolytic conductivity, improvement of the thermal stability, prevention of the deterioration of electrode due to hydration or dissolution, suppression of gas generation, improvement of the voltage proof, or improvement of the wettability. With respect to the content of the additive in the electrolyte, there is no particular limitation, but the content is preferably in the range of 0.1 to 20% by weight, more preferably in the range of 0.5 to 10% by weight.

For more surely preventing the electrolyte from leaking from the anode, it is preferred that various additives are added to the electrolyte.

As an additive, at least one compound selected from the group consisting of a phthalimide, a quinoline, a dioxime, a nitrophenol and an amino group-containing aromatic carboxylic acid can be used. At least one compound selected from the group consisting of an aluminum complex, a boric acid ester, and a silicic acid ester can be used. Further, at least one compound selected from the group consisting of a monocyclic quinone compound and a bicyclic quinone compound can be used. At least one tricyclic or higher polycyclic quinone compound can be used. The above compound is preferably contained in an amount of 0.1 to 5% by weight, based on the total weight of the electrolyte.

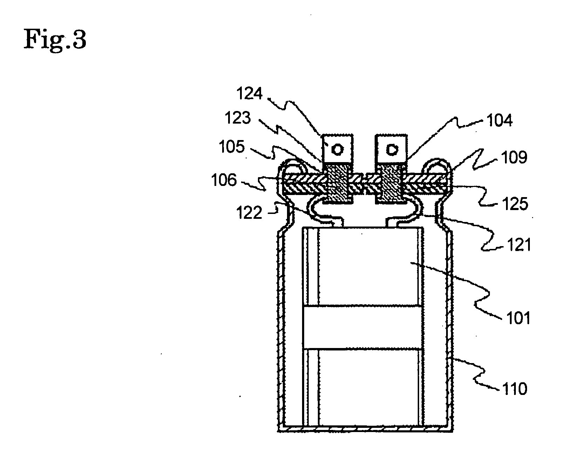

Next, an electrolytic capacitor having the structure shown in Fig. 3 as an example is described below. This structure is generally used in a large-size electrolytic capacitor.

The structure of the electrolytic capacitor can be formed as follows. Capacitor element 101 is formed by spirally winding anode foil 102 (not shown) and cathode foil 103 (not shown) together with separator 111 (not shown) disposed between the anode and cathode foils. Anode lead terminal 121 and cathode lead terminal 122 are connected to anode foil 102 and cathode foil 103, respectively. Capacitor element 101 is impregnated with an electrolyte for driving an electrolytic capacitor. Before impregnating the capacitor element with an electrolyte, a step for repair formation can be provided. This step is the same as the step for repair formation described above in connection with the small-size electrolytic capacitor.

Closure member 109 is formed by bonding together a hard insulating plate such as a phenolic resin laminated plate, and an elastic member such as a rubber plate. Rivets 104, 105 comprised of aluminum can be embedded in a center portion of closure member 109. Each of rivets 104, 105 comprises round bar portion 106 and head 123, and head 123 has external terminal 124, and they are fixed by caulking.

Anode lead terminal 121 and cathode lead terminal 122 of the above-mentioned capacitor element 101 impregnated with the electrolyte are, respectively, connected to the lower ends of rivets 104, 105, and capacitor element 101 is placed in closed-end cylinder casing 110 comprised of aluminum. Then, closure member 109 is inserted into the opening end of casing 110, and further the end of casing 110 is subjected to drawing and curling to seal the electrolytic capacitor. Thus the anode lead terminal and rivet constitute an anode lead means, and the cathode lead terminal and rivet constitute a cathode lead means. The individual parts are described below in detail.

In the present invention, with respect to anode foil 102, there is no particular limitation. For example, there can be used an anode foil obtained by chemically or electrochemically etching an aluminum foil having a purity of 99% or higher in an acidic solution to increase the surface area, and then subjecting the resultant aluminum foil to formation in an aqueous solution of, for example, ammonium borate or ammonium adipate to form an anode oxide film layer on the surface of the aluminum foil.

In the present invention, with respect to cathode foil 103, there is no particular limitation, and there can be used, for example, a cathode foil obtained by etching an aluminum foil having a purity of 99% or higher in the same manner as in anode foil 102. Like anode foil 102, the cathode foil may be subjected to formation at 1 to 2 V.

In the present invention, with respect to each of anode lead terminal 121 and cathode lead terminal 122, there is no particular limitation, and an aluminum foil having a purity of 99% or higher can be individually used.

In the present invention, as rivet 104 for anode, a rivet having a ceramic coating layer and/or an insulating synthetic resin layer on at least part of the rivet is used. For example, a coating composition comprising a metal alkoxide ceramic and/or a coating composition comprising an insulating synthetic resin is applied to round bar portion 106 of rivet 104, and then dried to form a ceramic coating layer and/or an insulating synthetic resin layer. From the viewpoint of surely preventing the electrolyte leakage, it is preferred that the above layer(s) is(are) formed on at least round bar portion 106 of rivet 104. It is further preferred that, prior to the coating, rivet 104 is subjected to formation to form an anode oxide film on the surface of the rivet.

The coating material and coating method used in this electrolytic capacitor are the same as those described above in connection with the small-size electrolytic capacitor.

Instead of the coating for rivet 104 for anode, coating may be conducted for anode lead terminal 121.

For preventing the electrolyte from leaking from the cathode, it is preferred that rivet 105 for cathode or cathode lead terminal 122 has the above ceramic coating layer and/or insulating synthetic resin layer.

With respect to the electrolyte, an electrolyte similar to that described above in connection with the small-size electrolytic capacitor can be used.

Hereinabove, the present invention is described with reference to the electrolytic capacitor shown in Figs. 1 and 2 and the electrolytic capacitor shown in Fig. 3 as examples, but the present invention is not limited to them. The materials, forms, amounts, ratios, procedure, and others in the above descriptions can be appropriately changed as long as the aim of the present invention is not sacrificed.

### Examples

Hereinbelow, the present invention will be described in more detail with reference to the following Examples, which should not be construed as limiting the scope of the present invention. The materials, amounts, ratios, procedure, and others in the Examples can be appropriately changed as long as the aim of the present invention is not sacrificed.

### Example 1

Electrolytic capacitors in the Examples were individually produced as follows.
An anode foil and a cathode foil were spirally wound together with a separator disposed between the anode and cathode foils to form a capacitor element having a rated voltage of 6.3 V x 100 µF and an element form of φ10 x 10 L.

As an anode foil, there was used one obtained by etching an aluminum foil having a purity of 99.9% to increase the surface area and then subjecting the resultant aluminum foil to formation to form an anode oxide film layer on the surface of the aluminum foil. As a cathode foil, there was used one obtained by etching an aluminum foil having a purity of 99.9% in the same manner as in the anode foil and forming a layer comprised of titanium nitride on the surface of the aluminum foil.

As a cathode lead means and an anode lead means, a lead wire comprising a connector for connection with the electrode foil, a round bar portion unified with the connector, and an external connector welded to the end of round bar portion 6 was prepared. Connector 7 and round bar portion 6 of the lead wire are individually comprised of 99.9% aluminum, and external connector 8 is comprised of a CP wire. An anode oxide film comprised of aluminum oxide was formed on the surface of round bar portion 6 of the lead wire by formation using an aqueous solution of ammonium phosphate.

Further, a ceramic coating layer was formed on each of the lead wires as an anode lead means and a cathode lead means. The ceramic coating layer was formed by applying a coating composition comprising metal alkoxide ceramics of Al₂O₃ and SiO₂ to round bar portion 6 of the lead wire, and subjecting the coating composition to heat treatment at 180°C for 10 seconds, and then further applying the coating composition, and then subjecting it to heat treatment at 180°C for 10 seconds and further to heat treatment at 180°C for 20 minutes. The ceramic coating layer had a thickness of 15 µm.

These lead wires were connected to the respective electrode foils through connectors 7.

The capacitor element was impregnated with an electrolyte (electrolyte having a concentration of 25% by weight, obtained by dissolving 1-ethyl-2,3-dimethylimidazolinium tetrafluoroaluminate in γ-butyrolactone), and placed in a closed-end cylinder casing comprised of aluminum, and closure 9 comprised of a peroxide vulcanized butyl rubber was inserted into the opening portion of the casing, and the end of the casing was subjected to drawing to hermetically seal casing 10, followed by reformation, thus obtaining an electrolytic capacitor in Example 1.

### Example 2

An electrolytic capacitor in Example 2 was obtained in the same manner as in Example 1 except that coating layers of insulating synthetic resin were respectively formed on the lead wires as an anode lead means and a cathode lead means. The coating layer of insulating synthetic resin was formed by applying by a coating method to the surface of round bar portion 6 of the lead wire a coating composition comprising 3 parts by weight of β-(3,4-epoxycyclohexyl)ethyltrimethoxysilane mixed into 97 parts by weight of an epoxy resin, and then drying the coating composition applied. The layer had a thickness of 15 µm.

### Comparative Example 1

An electrolytic capacitor in Comparative Example 1 was obtained in substantially the same manner as in Example 1 except that coating layers were not formed on the lead wires as an anode lead means and a cathode lead means.

### Measurement of electrolyte leakage

With respect to each of the electrolytic capacitors in Examples 1 and 2 and Comparative Example 1, electrolyte leakage was measured. A method for measurement is as follows. The electrolytic capacitor was allowed to stand at 85°C/85% RH for 1,500 hours or 2,000 hours, and then electrolyte leakage was evaluated in accordance with the "Standards" of Appendix 2 of EIAJ RC-2372. The occurrence of electrolyte leakage corresponds to criterion C or D in the Standards.

| | Number of electrolytic capacitors in which electrolyte leakage occurred (N = 15) | | | |
|---|---|---|---|---|
| | 1,500 Hours | | 2,000 Hours | |
| | Cathode | Anode | Cathode | Anode |
| Example 1 | 0 | 0 | 0 | 0 |
| Example 2 | 0 | 0 | 0 | 0 |
| Comparative Example 1 | 8 | 15 | 15 | 15 |

As is apparent from the above results, in the electrolytic capacitor of the present invention, the electrolyte is prevented from leaking from both the cathode and the anode.

## Claims

1. An electrolytic capacitor comprising:
a capacitor element which comprises an anode foil with an anode lead means and a cathode foil with a cathode lead means being spirally wound together with a separator disposed therebetween, the capacitor element being impregnated with an electrolyte;
a casing for containing therein the capacitor element; and
a closure for sealing up an opening portion of the casing,
wherein the anode lead means has a ceramic coating layer and/or an insulating synthetic resin layer at at least part of the portion in contact with the closure.

2. The electrolytic capacitor according to claim 1, wherein the ceramic coating layer and/or the insulating synthetic resin layer is formed prior to connection of the anode lead means to the anode foil.

3. The electrolytic capacitor according to claim 1 or 2, wherein the ceramic coating layer is formed by using a coating composition comprising a metal alkoxide ceramic using at least one member selected from the group consisting of Al₂O₃, SiO₂ and ZrO₂.

4. The electrolytic capacitor according to any one of claims 1 to 3, wherein the insulating synthetic resin layer is formed by using a coating composition comprising an epoxy resin and a silane coupling agent.

5. The electrolytic capacitor according to any one of claims 1 to 4, wherein the cathode foil comprises an aluminum foil having been formed on the surface thereof a layer which comprises at least one metal nitride selected from the group consisting of titanium nitride, zirconium nitride, tantalum nitride and niobium nitride, and/or at least one metal selected from the group consisting of titanium, zirconium, tantalum and nickel, with a thickness of 0.02 to 0.1 µm.

6. The electrolytic capacitor according to any one of claims 1 to 5, wherein the cathode foil is comprised of aluminum having a purity of less than 99.9% and containing at least one member selected from the group consisting of copper, iron, manganese, tin and titanium, and the cathode lead means is comprised of aluminum having a purity of 99.9% or higher.

7. The electrolytic capacitor according to any one of claims 1 to 6, wherein the cathode lead means has a ceramic coating layer and/or an insulating synthetic resin layer at at least part of the portion in contact with the closure.

8. The electrolytic capacitor according to any one of claims 1 to 7, wherein the electrolyte contains a tetrafluoroaluminate ion.

9. The electrolytic capacitor according to claim 8, wherein the electrolyte contains the tetrafluoroaluminate ion in the form of at least one tetrafluoroaluminate salt selected from the group consisting of a quaternary onium salt, an amine salt, an ammonium salt and an alkali metal salt.

10. The electrolytic capacitor according to any one of claims 1 to 9, wherein the capacitor element comprises an anode foil with an anode lead means and a cathode foil with a cathode lead means being spirally wound together with a separator disposed therebetween, the capacitor element being immersed in a formation electrolyte for repair formation before being impregnated with the electrolyte.
